# EUROPEAN PATENT SPECIFICATION

(11) **EP 3 369 196 B1**
(45) Date of publication and mention of the grant of the patent: **10.06.2020**
(21) Application number: 15787188.0
(22) Date of filing: 28.10.2015
(51) Int. Cl.: H04L 1/00, H04L 1/18

(54) **CENTRALIZATION OF DECODING**
ZENTRALISIERUNG VON DECODIERUNG
CENTRALISATION DE DÉCODAGE

(43) Date of publication of application: 05.09.2018
(73) Proprietor: Nokia Solutions and Networks Oy, 02610 Espoo (FI)
(72) Inventor: MAEDER, Andreas, 97074 Würzburg (DE); ROST, Peter, 69124 Heidelberg (DE); VIERING, Ingo, 81549 Munich (DE); FREDERIKSEN, Frank, DK-9270 Klarup (DK)
(74) Representative: Nokia EPO representatives
(86) International application number: PCT/EP2015/074968
(87) International publication number: WO 2017/071744

(56) References cited:
- US-A1- 2008 125 049
- US-A1- 2010 223 524
- ROST PETER ET AL: "Opportunistic Hybrid ARQ-Enabler of Centralized-RAN Over Nonideal Back", IEEE WIRELESS COMMUNICATIONS LETTERS, IEEE, PISCATAWAY, NJ, USA, vol. 3, no. 5, 1 October 2014 (2014-10-01) , pages 481-484, XP011561162, ISSN: 2162-2337, DOI: 10.1109/LWC.2014.2327982 [retrieved on 2014-10-09]

## Description

### Field of the invention

The present invention relates to an apparatus, a method, and a computer program product related to centralization. More particularly, the present invention relates to an apparatus, a method, and a computer program product related to centralization of decoding.

### Abbreviations

- 3GPP: 3rd Generation Partnership Project
- 5G: 5^{th} generation
- ACK/NAK: (Not) Acknowledged
- A/D: Analogue/Digital (conversion)
- ARQ: Automatic Repeat request
- CPU: Central Processing Unit
- CoMP: Collaborative Multi-Point
- CPRI: Common Public Radio Interface
- CSI: Channel State Information
- D/A: Digital/Analogue (conversion)
- DL: Downlink
- E2E: End to End
- eNB: evolved NodeB
- FEC: Forward Error Correction
- Gbps: Gigabits per second
- HARQ: Hybrid Automatic Repeat reQuest
- FEC: Forward Error Correction
- LA: Link Adaptation
- LDPC: Low-Density Parity-Check
- LTE: Long Term Evolution
- MAC: Media Access Control
- MCS: Modulation and Coding Scheme
- MHz: Megahertz
- MNO: Mobile Network Operator
- OAM: Operation And Maintenance
- OBSAI: Open Base Station Architecture Interface
- PDCP: Packet Data Convergence Layer
- PDU: Protocol Data Unit
- PHICH: Physical Hybrid-ARQ Indicator Channel
- PHY: Physical (layer)
- RAN: Radio Access Network
- RF: Radio Frequency
- RLC: Radio Link Control
- RNC: Radio Network Controller
- RRC: Radio Resource Control
- RRH: Remote Radio Head
- SINR: Signal to Interference and Noise Ratio
- TTI: Transmission Time Interval
- UE: User Equipment
- UL: Uplink

### Background of the invention

Mobile network operators (MNOs) have antenna sites where they install (at least) the antennas in order to cover a certain area. For outdoor sites the MNO typically wants to install the antennas at an exposed location (i.e. on top of a building, maybe even on a mast) for proper illumination.

The operator may not only place the antennas there, but additionally the whole base station, or parts of it.

Furthermore, the MNO also may have one or more data centres where it can place a lot of processing power (typically called "cloud"). Certainly there is the desire to require as much processing power as possible from those centralized clouds, and as little processing power from the antenna sites, since the cloud processing allows leveraging significant pooling gains and may lower operational expenditures, in particular maintenance costs. Namely, per-antenna-site processing has to be dimensioned for the maximum processing load at every site whereas the centralized cloud processing can benefit from the fact that never all cells operate at maximum load at the same time.

Hereinafter, the terms "antenna site" and "central site" are used as synonyms for the respective network elements (function), whereof the network function at the central site may be implemented in a cloud. The term "local" refers to the antenna site.

The interface between the cloud and the antenna site sets significant limits on the function split. This interface may be called fronthaul, midhaul or backhaul, depending on the functional split, see below. One obvious limitation is throughput, another limitation is latency. Implementing the interface on a fiber may allow large throughput, but as long as it is not a "dark" fiber (i.e. exclusively used for front-/mid-/backhaul), latency may still be an issue.

Another limitation is given by the need for standardization. The MNO typically does not want to be forced to buy the site equipment and the cloud equipment from the same vendor. So the interface is likely to require standardization efforts.

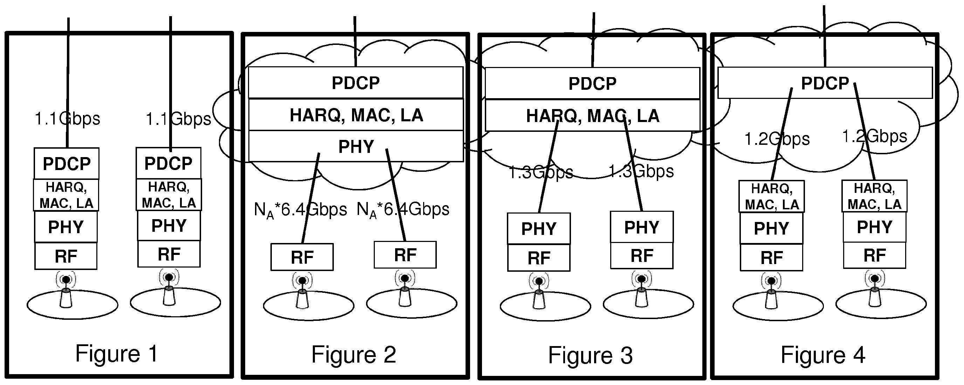

Fig. 1 shows the most widely used LTE network structure. All radio functionality is implemented in a base station called eNB which is installed right at the site (not necessarily at the mast, but at least very close to the antenna). The interface between eNB and the rest of the network (S1 to the core network and X2 to other eNBs) is only used as backhaul.

Obviously this does not create any centralization gain.

Fig. 2 shows the other extreme case which has also been considered in 3GPP. Only a "remote radio head" (RRH) is installed at the site, which consists only of the antenna and the RF part (i.e. all analogue components as well as A/D and D/A conversion). All the rest of the processing is done in a cloud.

Obviously, this architecture offers the maximum centralization gain, however it imposes strict requirements on the interface between RRH and the data center (cloud). There are two standards which are commonly used for this interface, i.e. CPRI (common public radio interface) and OBSAI (Open Base Station Architecture Interface).

In terms of throughput, the interface has to carry I/Q samples per deployed antenna element. This does not scale with the traffic, i.e. if there is little user traffic still all the I/Q samples have to be delivered. If we assume a 100MHz 5G system, 16 bit quantization and 2x oversampling, we end up in 6.4Gbps per antenna element, i.e. with 8 antennas more than 50Gbps are needed.

In terms of latency, a hard limitation is the hybrid ARQ (HARQ) cycle. With a design similar to LTE we would have 3 TTIs in total to process all the data and create the new frames (with ACK/NAK for the uplink, and with the retransmission in the downlink) which includes using of the fronthaul two times. Assuming 200µsec TTIs for 5G, the latency requirement for the fronthaul would be a small fraction of 300µsec, depending how fast the processing is. Let us assume 2 TTIs for processing, and 1TTI for 2x fronthaul, then the specific requirement would be 100µsec.

Providing an interface with such throughput and latency requirements to the sites will be too costly in many of the cases.

If the latency on the interface is larger than that, the following problems may occur:
- The performance of scheduling and link adaptation will suffer due to outdated channel estimates. This problem is typically called "aging". This effect will be negligible for slow terminals and is therefore not further discussed here.
- The current HARQ design would be violated. There are already solutions for that such as "HARQ skipping", which leaves out HARQ processes and thus can tolerate larger delays, but for the sake of per-UE throughput losses. For 5G the HARQ design might probably be more flexible to allow for larger fronthaul delays.
- However, longer fronthaul-delays are induced twice for each re-transmission, i.e. with 1ms latency, it will impact the PHY component of the E2E latency by 6ms if we plan for 3 HARQ transmissions. This would be an unacceptable situation for 5G networks.

Finally, the architecture of Fig. 2 allows for significant performance gains via collaboration methods such as CoMP (collaborative multi-point) transmission and reception.

Fig. 3 shows another alternative where the layer 1 (PHY) processing is kept at the local site and all upper layer processing is moved to the cloud. This massively reduces the throughput requirement. In particular the throughput requirement will scale with the user traffic, i.e. if the traffic is small then the interface is less occupied. This will allow for statistical multiplexing gains, but each link still needs to be dimensioned according to the potential peak throughput.

Assuming again a 5G system with 100MHz, a (very optimistic) spectral efficiency of 10bit/Hz/sec and 30% control overhead, the interface has to carry 1.3Gbps at maximum, irrespective of the antennas. This will be smaller in case of low user traffic.

However, the latency requirement is still as tight as described for Fig. 2 because the HARQ is still implemented in the cloud, i.e. HARQ is still subject to latency constraints on the link between site and central data center.

In addition, the centralization gain is also smaller. In particular, the forward error correction in the uplink, which is a dominant contributor to the CPU usage, is not centralized.

The architecture still allows for downlink CoMP (at the cost of increased throughput requirements, similar to existing 3GPP LTE systems), but uplink CoMP (in terms of joint coherent detection) is not possible.

Fig. 4 shows another alternative which is currently discussed in the 5G community. Here, in addition to the PHY the MAC and RLC layer (including scheduling, link adaptation and HARQ) are moved to the antenna site, such that only the PDCP is centralized.

This further reduces the centralization gain. In fact, the configuration and, thus, the centralization gain is already close to that of Fig. 1. However, assuming a very large number of small cells, this still allows some "concentration" gain, since the outside world would see the configuration more or less as one base station.

The benefit is that the configuration is much less sensitive to the latency of the interface. The data passes this interface only once, i.e. a 1ms interface contributes only with 1ms to the PHY component of the E2E latency (and not with 6ms as in Fig. 3). So, this architecture is "latency-friendly" even with a non-ideal interface to the site. The "mid-haul" interface according to Fig. 3 has not been defined yet, but unless the MNOs would allow for proprietary interfaces standardization is needed.

Throughput requirements are very similar to those of Fig. 3. Compared to Fig. 3, there is some benefit since less control information pollutes the interface. We are assuming a throughput requirement of 1.2Gbps instead of 1.3Gbps.

Other known methods are disclosed in US2008/0125049, US2010/0223524, and "Opportunistic Hybrid ARQ-Enabler of Centralized-RAN Over Nonideal Backhaul" by P. Rost and A. Prasad.

In general, encoding maps a source information to a digital representation which is the basis for the actual transmission. Decoding is the inverse operation of decoding.

### Summary of the invention

It is an object of the present invention to improve the prior art.

The invention is defined and limited by the scope of appended claims. In the following description, any embodiments referred to and not falling within the scope of the appended claims, are merely examples useful to the understanding of the invention.

### Brief description of the drawings

Further details, features, objects, and advantages are apparent from the following detailed description of example embodiments of the present invention which is to be taken in conjunction with the appended drawings, wherein
- Fig. 1: shows a network structure according to the prior art;
- Fig. 2: shows a network structure according to the prior art;
- Fig. 3: shows a network structure according to the prior art;
- Fig. 4: shows a network structure according to the prior art;
- Fig. 5: shows an architecture according to an embodiment of the invention;
- Fig. 6: shows an architecture according to an embodiment of the invention;
- Fig. 7: shows an apparatus according to an example embodiment of the invention;
- Fig. 8: shows a method according to an example embodiment of the invention; and
- Fig. 9: shows an apparatus according to an example embodiment of the invention;
- Fig. 10: shows a method according to an example embodiment of the invention;
- Fig. 11: shows an apparatus according to an example embodiment of the invention;
- Fig. 12: shows a method according to an example embodiment of the invention;
- Fig. 13: shows an apparatus according to an example embodiment of the invention; and
- Fig. 14: shows a system according to an example embodiment of the invention.

### Detailed description of certain example embodiments

Herein below, certain example embodiments of the present invention are described in detail with reference to the accompanying drawings, wherein the features of the example embodiments can be freely combined with each other unless otherwise described. However, it is to be expressly understood that the description of certain embodiments is given for by way of example only, and that it is by no way intended to be understood as limiting the invention to the disclosed details.

Moreover, it is to be understood that the apparatus is configured to perform the corresponding method, although in some cases only the apparatus or only the method are described.

Some embodiments of this invention address the network architecture of a mobile communication system such as LTE or, in the future, 5G. In particular, some of them address the problem of defining the functionality which is implemented right at the radio access point (antenna site), and the functionality which may be implemented in a centralized cloud which has an interface to the antenna site.

Conventionally, due to its fast re-transmissions, HARQ should be performed close to the remote site. Furthermore, conventionally, HARQ, scheduler and link adaptation should not be separated. For instance, when HARQ decides a retransmission the scheduler has to allocate radio resources for that (and link adaptation has to optimize MCS). If HARQ were in the antenna site and the scheduler were still in the cloud, the HARQ would need to "wait" for the scheduler to allocate the resources. Alternatively the scheduler might "blindly reserve" resources for HARQ. However, blind reservations would be costly and inefficient. Nevertheless, some of these options are discussed as well in the following.

As a conclusion, one may summarize the problem/dilemma of the prior art as follows:
- MNO has a non-ideal interface to the site (in particular latency);
- HARQ is at the site, otherwise it induces significant latencies;
- Scheduler/Link Adaptation should not be separated from the HARQ;
- MNO still wants to pool resources as much as possible.
Furthermore, it is repeated that FEC is a major part of the processing load.

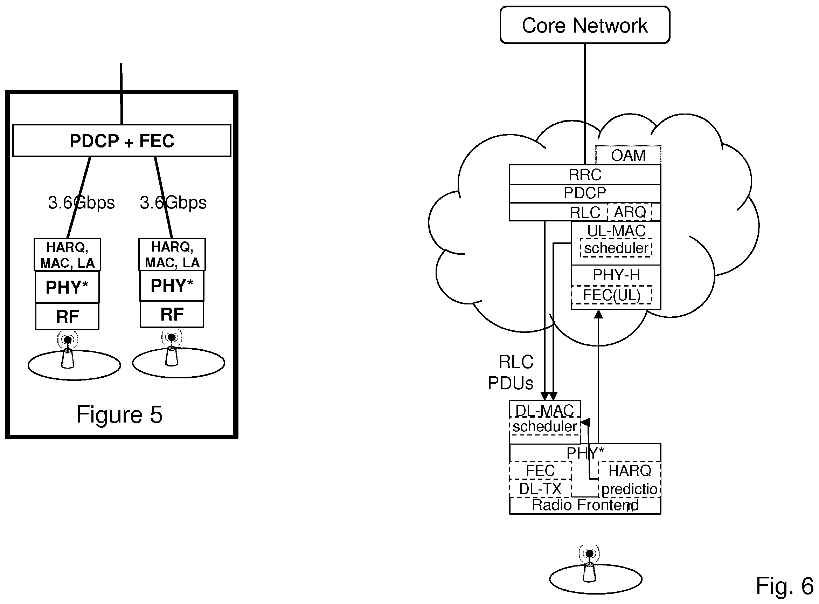

Fig. 5 shows an architecture according to an embodiment of the invention. According to this embodiment, decoding of the uplink signal is moved to the cloud. In Fig. 5, the remaining functionality of PHY in the antenna site (i.e. conventional PHY without decoding) including a HARQ prediction unit described later is designated by PHY*. In Fig. 5 and hereinafter, the decoding of the uplink signal is sometimes represented by FEC for the uplink since this is a dominant contribution to the CPU load. However, other type of decoding may be applied as well.

In the architecture according to some embodiments of the invention, UL-FEC is centralized, which allows for a number of benefits:
- A major part of the UL processing complexity is centralized and statistical multiplexing on the processing platform can be exploited;
- Joint UL decoding algorithms can be applied which improves the throughput performance;

Further, according to some embodiments of the invention, an HARQ estimation (=HARQ prediction) is implemented at the antenna site. The interface between the antenna sites and the central entity is accordingly adapted.

HARQ prediction according to some embodiments of the invention may provide at least one of the following aspects:
The HARQ mechanism predicts (estimates) at the antenna site whether a received codeword can be correctly decoded or not by a decoder located in a central node, e.g. using a function, which may be based on one or more of following: the received SINR quality, the used MCS scheme, and the target error probability. E.g. if the SINR is good enough (above a certain SINR threshold, for example), the prediction may be positive, and vice versa. If the MCS is reasonable robust in comparison with SINR or channel quality (above a certain threshold, for example), the prediction may be positive, and vice versa. The target error rate may affect the prediction as well. With lower target error rate, a positive prediction is more easily output.
∘ The HARQ prediction may be performed based on channel quality information for a particular user for which HARQ feedback needs to be provided. E.g. if the channel quality is good enough (above a certain CQI threshold, for example), the prediction may be positive, and vice versa.
∘ The HARQ prediction may include channel quality information of interfering user terminals whose data is jointly decoded at the central site.
∘ Received uplink packets may be communicated to the data center (=central node/site/cloud) individually or only after receiving all required packets for decoding. In the former case, the data center may provide feedback to the antenna site on the success of decoding.
∘ To make the correct HARQ prediction of a retransmitted packet, SINR of all codeblocks that are used to decode the information may be applied for the prediction. That is, the HARQ prediction may be based not only on the current retransmission but also previous (re)transmissions and combination of them (as different transmissions in HARQ may carry different redundancy versions of the same data block).
∘ The HARQ prediction may be dependent on the actual coding scheme that is applied, e.g. turbo-code, LDPC, or block-code.
∘ In deciding for ACK or NACK (with re-transmission), the prediction unit can receive radio-related information from the central unit. These could include, but are not limited to:
   ▪ Transmission attempt count (might be addressed through local book-keeping at the antenna site, too);
∘ Number of uplink reception points; in an embodiment relating to using multiple uplink reception points, the SINR quality may increase in the case that the signal is received from multiple reception points. This improvement in the SINR quality may be taken into account by the HARQ predictor.
   ▪ Expected UL SINR for each uplink reception point.
∘ The prediction unit can take into account long-term information from the central site in order to improve the outcome of the prediction:
   ▪ Interference information collected from measurements from surrounding cells;
   ▪ Channel prediction based on mobility information and/or interference information based on central/distributed inter-cell interference coordination (e.g., depending on location and number of scheduled parallel transmissions in a resource block).

Based on the prediction of the decoding success or failure, the HARQ mechanism in the antenna site decides if the data block is to be retransmitted from the UE to the antenna site in uplink or if an uplink transmission of another data block may be scheduled. This decision is met independently from the result of the actual decoding at the central data center. I.e., the HARQ mechanism in the antenna site does not wait for a feedback from the central site in order schedule either a re-transmission or a new transmission. Such autonomous request of retransmission or new transmission may reduce latency.

According to some embodiments of the invention, the calibration of the HARQ estimator is such that the target error probability of RLC is not exceeded. In one embodiment, the central node may configure the prediction algorithm at the antenna site based on the actual prediction success of the prediction algorithm. This update of the configuration can be done in the central node by using commands to the antenna site. In this embodiment, there is no need to transmit success/unsuccessful indications from the central node to the antenna site. On the other hand, in one embodiment, a self-learning algorithm may be applied at the antenna site based on the feedback success/unsuccessful feedback from the central node. In case the predictor makes often (according to some predefined threshold) mistakes in the prediction, the algorithm may need to be improved. In other words, HARQ prediction routine may be calibrated based on past events. For such calibration, artificial intelligence may be used. Alternatively, or in addition, the HARQ prediction routine may be adapted based on instructions from the central site. For example, the SINR threshold may be adapted in the calibration of the HARQ estimator.

Irrespective of the result of the prediction of the decoding success for a received encoded data block, the antenna site forwards the encoded data block to the central site for decoding.
∘ Decoding (e.g. a type of decoding including FEC) is not performed at the antenna site such that the processing requirements for the antenna site are relaxed. Also, thus, an additional delay for decoding at the antenna site is not introduced.
∘ The prediction unit may also transmit the prediction (i.e. the decision on re-transmission) to the central processing entity, such that the central processing unit can use the information for centralized optimizations, such as pre-assignment of resources for decoding, or re-parametrization of the local decision unit based on longer-term statistical measurement and processing of the decoding and estimation values.

Fig. 6 shows another architecture according to an embodiment of the invention. Only a difference to the architecture of Fig. 5 is discussed hereinafter. The remaining functions correspond to those of Fig. 5.

As shown in Fig. 6, the UL MAC scheduler is located in the central site. It assigns (reserves) resources which are used for re-transmissions (blind reservation). An indication of the reserved resources is then sent to the antenna site. Based on the HARQ prediction outcome, re-transmissions are then allocated by the antenna site into these reserved (pre-allocated) resources.

In some embodiments of the invention, the resources reserved by the UL MAC scheduler at the central site are exclusively allocated to re-transmissions, i.e. new transmissions are inhibited on the reserved resources.

However, in some embodiments of the invention, the local site which may allocate some of the reserved resources to new transmissions if these reserved resources are not needed for re-transmissions. In an embodiment, this may take place by another UL MAC scheduler located at the antenna site. Thus, the flexibility and spectral efficiency are improved at the cost of a higher processing load and complexity at the antenna site.

The local site may also provide "soft-bits" along with the encoded data to the central site. The term "soft bits" refers to reliability information on the detected symbols.

According to some embodiments of the invention, the actual assignment of RAN functionality to network nodes may be different in UL and DL, i.e.
∘ In DL, all processing below RRC may be performed at the antenna site (for reasons described above);
∘ In UL, PHY (excl. FEC) and MAC are performed at the site. However, in some embodiments such as that shown in Figure 5, the UL MAC is also at the central node.

In some embodiments of the invention, the assignment may be done flexibly according to the available resources (Fronthaul capacity and latency, computational resources). For example, antenna site and central site may exchange information about their capabilities via the interface. E.g., based on this information, one or both of the antenna site and the antenna site may decide to place UL FEC locally (at the antenna site) or centralized and may inform the other entity on the placement decision. Also, the operator may decide for some or all of the antenna sites if UL FEC is to be placed locally or centralized. Thus, the operator has a choice to use the conventional architecture of Fig. 4 (without FEC centralization) or an architecture according to an embodiment of this invention (with FEC centralization).

In this case, the fronthaul interface may be designed as follows:
∘ Either encoded or decoded data can be conveyed.
∘ The interface supports signaling of capabilities of one or both of the antenna site and the central site, i.e., it is indicated whether FEC is placed locally or centralized for UL and DL. The operator has the choice to use the conventional Figure 4 (without FEC centralization) or this invention (with FEC centralization).

Furthermore, the fronthaul interface may carry soft-bits from the antenna site to the central site. For example, in this case, the interface may be designed as follows:
∘ Depending on the configuration, soft-bits could be transported in the same protocol data units as defined for bit transportation (e.g., in RLC PDUs).
∘ The soft-bit quantization level may differ and could range from 1-4 bits or higher per encoded bit.

Furthermore, the fronthaul interface may support one or more of the following functionalities:
∘ CSI may be transmitted in order to facilitate joint decoding of multiple user terminals.
∘ The interface may carry the control information necessary to decode the data (e.g. coding rate, redundancy version).
∘ The interface may support signaling of supporting information for HARQ prediction from the central unit.

According to some embodiments of the invention, the central site (cloud) is informed about the result of the prediction at the antenna site. The central site may compare the prediction result with the actual result of the decoding. If the prediction was false (false negative or false positive) the following actions may be performed:
If the prediction was negative (and a NAK was sent from antenna site to the terminal), but the codeword could successfully be decoded at the central site (false negative prediction), the predictor should be informed such that the prediction for the retransmission of the same data will definitely be positive (one retransmission was wasted in this case).

If the retransmitted data block is forwarded to the decoder at the central site (as all other received data blocks), the decoder will be provided with additional redundancy and possibly finishes decoding with less complexity. Alternatively, the antenna site may not forward the received retransmitted data block if a false negative indication is received from the central site.

If the prediction was positive (and an ACK was sent from antenna site to the terminal) but the codeword could NOT be decoded (false positive prediction), ARQ in higher layers may be responsible for re-transmission. The central site sends an indication to the antenna site, which in turn asks the UE to send the data again.

In some embodiments of the invention, this procedure is optimized as follows: if the central site finds out that the prediction was false positive, it will request retransmission immediately for the last n predicted RLC segments after the last successfully decoded segment, since it is clear that in this case there is no need to wait for eventual out-of-order segments.

According to some embodiments of the invention, compared to decoding at the antenna site, significant uplink decoding improvements may be achieved by using extrinsic information from the decoding process of other users, i.e. the decoding result of one user may be used to improve the decoding behavior of another user, e.g. to improve the quality of the log-likelihood ratios. This is similar to successive interference cancellation where interference from other users is "subtracted", although only likelihoods are updated based on soft-information. The full uplink CoMP gain might not be achieved, but the decoding throughput will likely be better than pure non-collaborative interference cancellation.

Embodiments of the invention seem to increase the throughput requirements on the interface compared with those of Fig. 4 because the interface has to carry the redundancy of the channel code. However, the dimensioning is typically done for the peak spectral efficiency in which case the redundancy is close to zero. Significant redundancy is invested only in cases of lower spectral efficiency.

On the other hand, the interface may carry soft bits (i.e. reliability information), helping not to sacrifice performance. Quantitatively, the throughput requirement would increase from ∼ 1.2Gbps to ∼3.6Gbps which is still less than the 6.4Gbps per antenna according to Fig. 1.

Furthermore, according to some embodiments of the invention, the split of decoding and HARQ are separated for the uplink only. On the downlink the throughput requirement remains at the 1.2Gbps.

Some embodiments thus provide for a different degree of centralization in UL and DL. This may be achieved by the placement of the UL FEC (or any other type of coder/decoder) in the central site and the placement of the DL FEC (or any other type of coder/decoder) in the antenna site.

Some embodiments provide for a central or multi-level scheduling using pre-allocated resources for retransmissions.

Some embodiments provide for exchanging soft-bit quantized output of the antenna sites, wherein the number of soft-bits may be chosen depending on the available transport network bandwidth, radio access channel quality, and/or based on the likelihood of decoding success.

Some embodiments provide for a learning algorithm that adopts parameters of the HARQ estimation algorithm depending on the success statistics of the prediction.

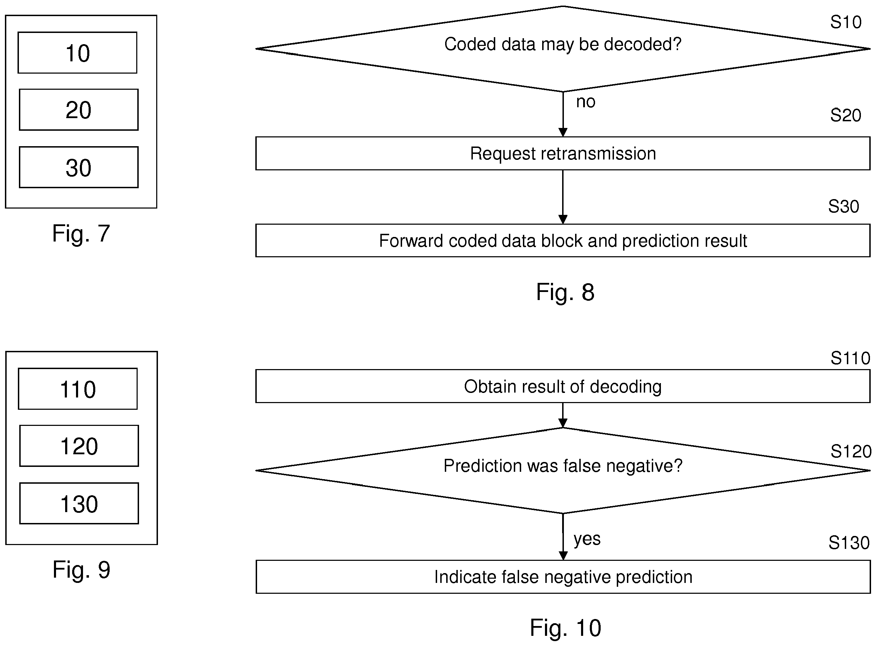

Fig. 7 shows an apparatus according to an example embodiment of the invention. The apparatus may be an antenna site such as a RRH or an eNB, or an element thereof. Fig. 8 shows a method according to an example embodiment of the invention. The apparatus according to Fig. 7 may perform the method of Fig. 8 but is not limited to this method. The method of Fig. 8 may be performed by the apparatus of Fig. 7 but is not limited to being performed by this apparatus.

The apparatus comprises predicting means 10, requesting means 20, and forwarding means 30. The predicting means 10, requesting means 20, and forwarding means 30 may be a predicting circuitry, requesting circuitry, and forwarding circuitry, respectively.

The predicting means 10 predicts if a received coded data block can be successfully decoded by a predetermined decoder adapted to apply a predetermined decoding on the coded data block (S10). The predetermined decoder may be comprised in a central device such as a centralized cloud. The coded data block may be received on an uplink. The predetermined decoder may be a FEC decoder, such as a turbo decoder, a convolutional decoder, or it may be a decoder not using FEC such as an LDPC decoder, a Reed-Solomon decoder, or a decoder for block codes, to mention only a few non-limiting examples.

If the predicting means 10 predicts that the coded data block cannot be decoded by the decoder (S10 = "no"), the requesting means 20 requests a retransmission of the coded data block to the apparatus (S20). I.e, if the coded data block is received on an uplink from a terminal to the apparatus, the requesting means 20 requests the terminal to retransmit the coded data block to the apparatus.

The forwarding means 30 forwards the coded data block and a result of the prediction to the central device without applying the predetermined decoding to the coded data block (S30).

Fig. 9 shows an apparatus according to an example embodiment of the invention. The apparatus may be a central site such as a cloud, or an element thereof. Fig. 10 shows a method according to an example embodiment of the invention. The apparatus according to Fig. 9 may perform the method of Fig. 10 but is not limited to this method. The method of Fig. 10 may be performed by the apparatus of Fig. 9 but is not limited to being performed by this apparatus.

The apparatus comprises decoding result obtaining means 110, false negative prediction means 120 and false negative indicating means 130. The decoding result obtaining means 110, false negative prediction means 120 and false negative indicating means 130 may be a decoding result obtaining circuitry, false negative prediction circuitry and false negative indicating circuitry, respectively.

The decoding result obtaining means 110 obtains a decoding result (S110). The decoding result indicates whether or not decoding of a received coded data block at the central node was successful. The coded data block, which is to be decoded by the predetermined decoder at the central node, is received for the decoding along with a prediction result from an access node.

The false negative prediction detecting means 120 detects a false negative prediction if the prediction result is negative and the decoding result is positive (S120). I.e., the false negative prediction detecting means 120 compares the result of the decoding and the prediction result to detect a false negative prediction.

If the false negative prediction is detected (S120 = "yes"), the false negative indicating means 130 indicates to the access point that the prediction was false negative (S130).

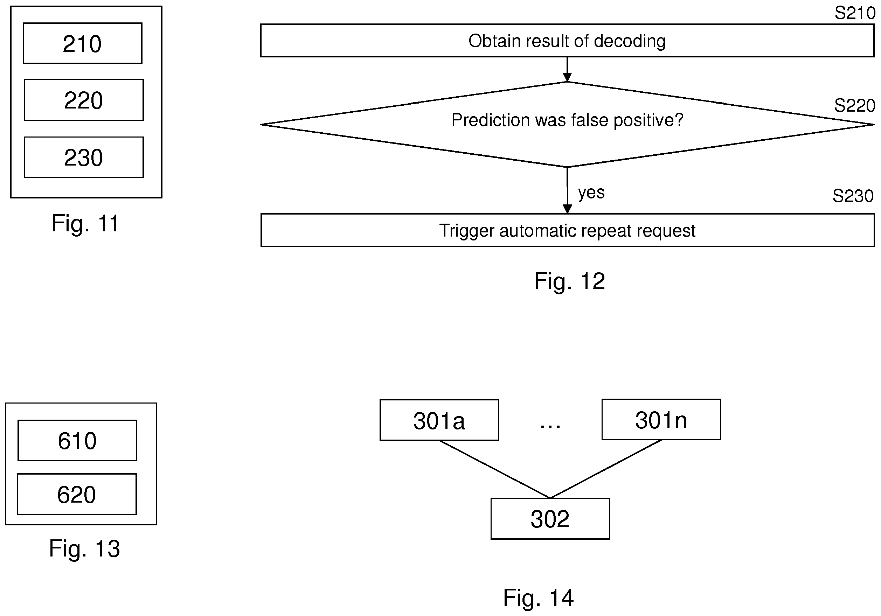

Fig. 11 shows an apparatus according to an example embodiment of the invention. The apparatus may be a central site such as a cloud, or an element thereof. Fig. 12 shows a method according to an example embodiment of the invention. The apparatus according to Fig. 11 may perform the method of Fig. 12 but is not limited to this method. The method of Fig. 12 may be performed by the apparatus of Fig. 11 but is not limited to being performed by this apparatus.

The apparatus comprises decoding result obtaining means 210, false positive prediction means 220 and false positive correction means 230. The decoding result obtaining means 210, false positive prediction detecting means 220 and false positive correction means 230 may be a decoding result obtaining circuitry, false positive prediction circuitry and false positive correction circuitry, respectively.

The decoding result obtaining means 210 obtains a decoding result (S210). The decoding result indicates whether or not decoding of a received coded data block was successful. The coded data block is received for the decoding along with a prediction result from an access node.

The false positive prediction detecting means 220 detects a false positive prediction if the prediction result is positive and the decoding result is negative (S220). I.e., the false positive prediction detecting means 220 compares the result of the decoding and the prediction result to detect a false positive prediction.

If the false positive prediction is detected (S220 = "yes"), the false positive correction means 230 triggers an automatic repeat request means to request a retransmission of the coded data block (S230). The automatic repeat request means may be an automatic repeat request function of a higher layer than PHY.

Fig. 13 shows an apparatus according to an example embodiment of the invention. The apparatus comprises at least one processor 610, at least one memory 620 including computer program code, and the at least one processor 610, with the at least one memory 620 and the computer program code, being arranged to cause the apparatus to at least perform at least one of the methods according to Figs. 8, 10, and 12 and related description.

Fig. 14 shows a system according to an embodiment of the invention. The system comprises
one or more access apparatuses 301a ... 301n according to Fig. 7 and a central apparatus 302 according to any of Figs. 9 and 11, wherein the received coded data block of the central apparatus comprises the forwarded coded data block of one of the access apparatuses; the prediction result of the central apparatus comprises the result of the prediction by the one of the access apparatuses; and the access node of the central apparatus comprises the one of the access apparatuses.

The central node 302 may manage the plurality of the access apparatuses. Managing may include performing the UL decoding for each of the access apparatuses 301a-301n.

One piece of information may be transmitted in one or plural messages from one entity to another entity. Each of these messages may comprise further (different) pieces of information.

Names of network elements, protocols, and methods are based on current standards. In other versions or other technologies, the names of these network elements and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software.

Some example embodiments of the invention may be applied to a 3GPP network (e.g. LTE, LTE-A, or a 5G network), as described hereinabove. However, some example embodiments of the invention may be applied to any kind of network with a function split between one or more access nodes providing access to terminals and a central node. The access may be wireless or wired.

A terminal may be any kind of terminal which may attach to the respective network. E.g., a terminal may be a UE, a device of a machine-type communication, a laptop, a smartphone, a mobile phone etc.

According to the above description, it should thus be apparent that example embodiments of the present invention provide, for example an access node such as a base station, a NodeB, an eNodeB, or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example a central node such as a RNC, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques, means, entities, units, devices, or methods include, as non-limiting examples, implementations as hardware, software, firmware, special purpose circuits or logic, general purpose hardware or controller or other computing devices, a virtual machine, or some combination thereof.

It should be noted that the description of the embodiments is given by way of example only and that various modifications may be made without departing from the scope of the invention as defined by the appended claims.

## Claims

1. Apparatus, comprising
predicting means adapted to predict whether or not a coded data block received by the apparatus on an uplink can be successfully decoded by a predetermined decoder adapted to apply a predetermined decoding on the coded data block, wherein the apparatus is or is comprised in an access node of a radio access network and the predetermined decoder is comprised in a central device managing a plurality of access nodes and connected to the access node with an interface;
forwarding means adapted to forward the coded data block and the result of the prediction to the central device without applying the predetermined decoding to the coded data block;
requesting means adapted to request a retransmission of the coded data block to the apparatus if the predicting means predicts that the coded data block cannot be decoded by the decoder, and
modifying means adapted to modify an algorithm used by the predicting means to predict whether or not the received coded data block can be successfully decoded, the modifying being based at least on an information on a rate of false predictions received from the central device.

2. The apparatus according to claim 1, wherein the forwarding means is adapted to forward the coded data block regardless of whether or not the prediction means predicts that the decoder can decode the coded data block.

3. The apparatus of any of the preceding claims, further comprising:
receiving means adapted to receive an indication from the central device that the central device determines that the result of the prediction is different from a decoding result of the data block at the central device, wherein
the requesting means is adapted to request the retransmission regardless of whether or not the indication is received from the central device.

4. The apparatus according to claim 3, further comprising
monitoring means adapted to monitor if the received indication indicates a false negative prediction;
enforcing means adapted to enforce, if the false negative prediction indication is received, the predicting means to predict that a received retransmitted coded data block can be successfully decoded by the predetermined decoder, wherein the retransmitted coded data block is received due to a request for the retransmission of the coded data block.

5. The apparatus according to any of claims 1 to 4, further comprising
coding means adapted to encode a downlink data block received from the central device.

6. The apparatus according to any of claims 1 to 5, further comprising
scheduling means adapted to schedule a downlink resource for the request for the retransmission.

7. The apparatus according to any of claims 1 to 6, further comprising
reserving means adapted to reserve a portion of an uplink resource for retransmissions including the retransmission of the coded data block based on an instruction from the central device, wherein the instruction is received prior to the coded data block;
allocating means adapted to allocate the reserved portion of the uplink resource for the retransmissions;
inhibiting means adapted to inhibit allocating the reserved portion of the uplink resource for another transmission different from the retransmissions.

8. The apparatus according to any of claims 1 to 7, wherein the predicting means is adapted to predict if the received coded data block can be successfully decoded based on at least one of a signal to interference and noise ratio quality of at least one of the received coded data block and a received other coded data block different from the coded data block, a modulation scheme of at least one of the received coded data block and the other coded data block, a coding scheme of at least one of the received coded data block and the other coded data block, a target error probability, an interference information from a surrounding cell received from the central device, and a channel prediction received from the central device.

9. The apparatus according to any of claims 1 to 8, further comprising
soft bit providing means adapted to provide one or more soft bits along with the coded data block and the prediction result, wherein the one or more soft bits indicate a reliability of the prediction result.

10. Apparatus, comprising
receiving means for receiving a coded data block and a prediction result from an access node connected with an interface with the apparatus, wherein the prediction result indicates whether or not the coded data block can be successfully decoded by the apparatus, wherein the apparatus is or is comprised in a central device managing a plurality of access nodes;
decoding means for decoding the received coded data block;
decoding result obtaining means adapted to obtain a decoding result from the decoding means, wherein the decoding result indicates whether or not the decoding of the received coded data block was successful; and
at least one of a combination of a false negative prediction detecting means and a false negative indicating means and a combination of a false positive prediction detecting means and a false positive correction means, wherein
the false negative prediction detecting means is adapted to detect a false negative prediction if the prediction result is negative and the decoding result is positive;
the false negative indicating means is adapted to indicate to the access node that the prediction was false negative if the false negative prediction is detected;
the false positive prediction detecting means is adapted to detect a false positive prediction if the prediction result is positive and the decoding result is negative; and
the false positive correction means is adapted to trigger an automatic repeat request means to request a retransmission of the coded data block if the false positive prediction is detected; and
modifying means adapted to modify an algorithm based on at least one of a rate of the false positive predictions and a rate of the false negative predictions, wherein the algorithm is used by a predicting means in the access node to obtain the prediction result.

11. The apparatus according to claim 10, wherein
the decoding means uses forward error correction in the decoding of the received coded data block.

12. The apparatus according to any of claims 10 to 11, further comprising
reserving means adapted to reserve a portion of an uplink resource for a retransmission initiated by the access node;
indicating means adapted to indicate the reserved portion to the access node; and
inhibiting means adapted to inhibit allocating the reserved portion of the uplink resource to an uplink transmission not initiated by the access node.

13. Method, comprising
predicting whether or not a coded data block received by an apparatus on an uplink can be successfully decoded by a predetermined decoder adapted to apply a predetermined decoding on the coded data block, wherein the apparatus is or is comprised in an access node of a radio access network and the predetermined decoder is comprised in a central device managing a plurality of access nodes and connected to the access node with an interface;
forwarding the coded data block and a result of the prediction to the central device without applying the predetermined decoding to the coded data block;
requesting a retransmission of the coded data block to an apparatus performing the method if it is predicted that the coded data block cannot be decoded by the decoder; and
modifying said predicting whether or not the received coded data block can be successfully decoded, the modifying being based at least on an information on a rate of false predictions received from the central device.

## Patentansprüche

1. Einrichtung, umfassend:
Vorhersagemittel, dafür ausgelegt vorherzusagen, ob ein codierter Datenblock, der von der Einrichtung auf einem Uplink empfangen wird, von einem vorbestimmten Decoder, der dafür ausgelegt ist, eine vorbestimmte Decodierung auf den codierten Datenblock anzuwenden, erfolgreich decodiert werden kann oder nicht, wobei die Einrichtung ein Zugangsknoten eines Funkzugangsnetzes ist oder darin enthalten ist und der vorbestimmte Decoder in einer zentralen Vorrichtung enthalten ist, die mehrere Zugangsknoten verwaltet und mit dem Zugangsknoten über eine Schnittstelle verbunden ist;
Weiterleitungsmittel, dafür ausgelegt, den codierten Datenblock und das Ergebnis der Vorhersage an die zentrale Vorrichtung weiterzuleiten, ohne die vorbestimmte Decodierung auf den codierten Datenblock anzuwenden;
Anforderungsmittel, dafür ausgelegt, eine Neuübertragung des codierten Datenblocks an die Einrichtung anzufordern, falls das Vorhersagemittel vorhersagt, dass der codierte Datenblock nicht von dem Decoder decodiert werden kann; und
Modifizierungsmittel, dafür ausgelegt, einen Algorithmus zu modifizieren, der von dem Vorhersagemittel verwendet wird, um vorherzusagen, ob der empfangene codierte Datenblock erfolgreich decodiert werden kann oder nicht, wobei das Modifizieren wenigstens auf einer Information zu einer Rate von falschen Vorhersagen basiert, die von der zentralen Vorrichtung empfangen wird.

2. Einrichtung gemäß Anspruch 1, wobei das Weiterleitungsmittel dafür ausgelegt ist, den codierten Datenblock weiterzuleiten, unabhängig davon, ob das Vorhersagemittel vorhersagt oder nicht vorhersagt, dass der Decoder den codierten Datenblock decodieren kann.

3. Einrichtung nach einem der vorstehenden Ansprüche, ferner umfassend:
Empfangsmittel, dafür ausgelegt, eine Angabe von der zentralen Vorrichtung zu empfangen, dass die zentrale Vorrichtung bestimmt, dass das Ergebnis der Vorhersage von einem Decodierungsergebnis des Datenblocks an der zentralen Vorrichtung verschieden ist, wobei das Anforderungsmittel dafür ausgelegt ist, die Neuübertragung anzufordern, unabhängig davon, ob die Angabe von der zentralen Vorrichtung empfangen wird oder nicht.

4. Einrichtung gemäß Anspruch 3, ferner umfassend:
Überwachungsmittel, dafür ausgelegt zu überwachen, ob die empfangene Angabe eine falsche negative Vorhersage anzeigt;
Durchsetzungsmittel, dafür ausgelegt, falls die Angabe der falschen negativen Vorhersage empfangen wird, durchzusetzen, dass das Vorhersagemittel vorhersagt, dass ein empfangener erneut übertragener codierter Datenblock von dem vorbestimmten Decoder erfolgreich decodiert werden kann, wobei der erneut übertragene codierte Datenblock aufgrund einer Anforderung der Neuübertragung des codierten Datenblocks empfangen wird.

5. Einrichtung gemäß einem der Ansprüche 1 bis 4, ferner umfassend
Codiermittel, dafür ausgelegt, einen Downlink-Datenblock, der von der zentralen Vorrichtung empfangen wird, zu codieren.

6. Einrichtung gemäß einem der Ansprüche 1 bis 5, ferner umfassend
Planungsmittel, dafür ausgelegt, eine Downlink-Ressource für die Anforderung der Neuübertragung zu planen.

7. Einrichtung gemäß einem der Ansprüche 1 bis 6, ferner umfassend:
Reservierungsmittel, dafür ausgelegt, einen Teil einer Uplink-Ressource für Neuübertragungen zu reservieren, was die Neuübertragung des codierten Datenblocks basierend auf einer Anweisung von der zentralen Vorrichtung einschließt, wobei die Anweisung vor dem codierten Datenblock empfangen wird;
Zuteilungsmittel, dafür ausgelegt, den reservierten Teil der Uplink-Ressource für die Neuübertragungen zu reservieren;
Verhinderungsmittel, dafür ausgelegt ist, das Zuteilen des reservierten Teils der Uplink-Ressource für eine weitere, von den Neuübertragungen verschiedene Übertragung zu verhindern.

8. Einrichtung gemäß einem der Ansprüche 1 bis 7, wobei das Vorhersagemittel dafür ausgelegt ist vorherzusagen, ob der empfangene codierte Datenblock erfolgreich decodiert werden kann, basierend auf wenigstens einem von einer Signal-zu-Interferenz-und-Rausch-Verhältnis-Qualität von wenigstens einem von dem empfangenen codierten Datenblöcke und einem empfangenen anderen codierten Datenblock, der von dem codierten Datenblock verschieden ist, einem Modulationsschema von wenigstens einem von dem empfangenen codierten Datenblock und dem anderen codierten Datenblock, einem Codierschema von wenigstens einem von dem empfangenen codierten Datenblock und dem anderen codierten Datenblock, einer Soll-Fehlerwahrscheinlichkeit, einer Interferenzinformation von einer umgebenden Zelle, die von der zentralen Vorrichtung empfangen wird, und einer Kanalvorhersage, die von der zentralen Vorrichtung empfangen wird.

9. Einrichtung gemäß einem der Ansprüche 1 bis 8, ferner umfassend
Soft-Bit-bereitstellende(s) Mittel, dafür ausgelegt, ein oder mehrere Soft-Bits zusammen mit dem codierten Datenblock und dem Vorhersageergebnis bereitzustellen, wobei die ein oder mehreren Soft-Bits eine Zuverlässigkeit des Vorhersageergebnisses anzeigen.

10. Einrichtung, umfassend:
Empfangsmittel zum Empfangen eines codierten Datenblocks und eines Vorhersageergebnisses von einem Zugangsknoten, der über eine Schnittstelle mit der Einrichtung verbunden ist, wobei das Vorhersageergebnis anzeigt, ob der codierte Datenblock von der Einrichtung erfolgreich decodiert werden kann oder nicht, wobei die Einrichtung eine mehrere Zugangsknoten verwaltende zentrale Vorrichtung ist oder darin enthalten ist;
Decodierungsmittel zum Decodieren des empfangenen codierten Datenblocks;
Decodierungsergebnis-erhaltendes Mittel, dafür ausgelegt, ein Decodierungsergebnis von dem Decodierungsmittel zu erhalten, wobei das Decodierungsergebnis anzeigt, ob die Decodierung des empfangenen codierten Datenblocks erfolgreich war oder nicht; und
wenigstens eines von einer Kombination aus einem Erkennungsmittel für falsche negative Vorhersagen und einem Anzeigemittel für falsche Negative und einer Kombination aus einem Erkennungsmittel für falsche positive Vorhersagen und einem Korrekturmittel für falsche Positive, wobei
das Erkennungsmittel für falsche negative Vorhersagen dafür ausgelegt ist, eine falsche negative Vorhersage zu erkennen, falls das Vorhersageergebnis negativ ist und das Decodierungsergebnis positiv ist;
das Anzeigemittel für falsche Negative dafür ausgelegt ist, dem Zugangsknoten anzuzeigen, dass die Vorhersage ein falsches Negativ war, falls die falsche negative Vorhersage erkannt wird;
das Erkennungsmittel für falsche positive Vorhersagen dafür ausgelegt ist, eine falsche positive Vorhersage zu erkennen, falls das Vorhersageergebnis positiv ist und das Decodierungsergebnis negativ ist; und
das Korrekturmittel für falsche Positive dafür ausgelegt ist, ein Anforderungsmittel für eine automatische Wiederholung auszulösen, um eine Neuübertragung des codierten Datenblocks anzufordern, falls die falsche positive Vorhersage erkannt wird; und
Modifizierungsmittel, dafür ausgelegt, einen Algorithmus basierend auf wenigstens einem von einer Rate der falschen positiven Vorhersagen und einer Rate der falschen negativen Vorhersagen zu modifizieren, wobei der Algorithmus von einem Vorhersagemittel in dem Zugangsknoten verwendet wird, um das Vorhersageergebnis zu erhalten.

11. Einrichtung gemäß Anspruch 10, wobei das Decodierungsmittel eine Vorwärtsfehlerkorrektur bei der Decodierung des empfangenen codierten Datenblocks verwendet.

12. Einrichtung gemäß einem der Ansprüche 10 bis 11, ferner umfassend:
Reservierungsmittel, dafür ausgelegt, einen Teil einer Uplink-Ressource für eine vom Zugangsknoten initiierte Neuübertragung zu reservieren;
Anzeigemittel, dafür ausgelegt, dem Zugangsknoten den reservierten Teil anzuzeigen; und
Verhinderungsmittel, dafür ausgelegt, ein Zuteilen des reservierten Teils der Uplink-Ressource zu einer nicht vom Zugangsknoten initiierten Uplink-Übertragung zu verhindern.

13. Verfahren, umfassend:
Vorhersagen, ob ein codierter Datenblock, der von einer Einrichtung auf einem Uplink empfangen wird, von einem vorbestimmten Decoder, der dafür ausgelegt ist, eine vorbestimmte Decodierung auf den codierten Datenblock anzuwenden, erfolgreich decodiert werden kann oder nicht, wobei die Einrichtung ein Zugangsknoten eines Funkzugangsnetzes ist oder darin enthalten ist und der vorbestimmte Decoder in einer zentralen Vorrichtung enthalten ist, die mehrere Zugangsknoten verwaltet und mit dem Zugangsknoten über eine Schnittstelle verbunden ist;
Weiterleiten des codierten Datenblocks und eines Ergebnisses der Vorhersage an die zentrale Vorrichtung, ohne die vorbestimmte Decodierung auf den codierten Datenblock anzuwenden;
Anfordern einer Neuübertragung des codierten Datenblocks an eine Einrichtung, die das Verfahren durchführt, falls vorhergesagt wird, dass der codierte Datenblock nicht von dem Decoder decodiert werden kann; und
Modifizieren des Vorhersagens, ob der empfangene codierte Datenblock erfolgreich decodiert werden kann oder nicht, wobei das Modifizieren wenigstens auf einer Information zu einer Rate von falschen Vorhersagen basiert, die von der zentralen Vorrichtung empfangen wird.

## Revendications

1. Appareil, comprenant :
un moyen de prédiction adapté pour prédire si un bloc de données codé reçu par l'appareil sur une liaison montante peut être décodé ou non avec succès par un décodeur prédéterminé adapté pour appliquer un décodage prédéterminé sur le bloc de données codé, l'appareil étant ou étant compris dans un nœud d'accès d'un réseau d'accès radio et le décodeur prédéterminé étant compris dans un dispositif central gérant une pluralité de nœuds d'accès et connecté au nœud d'accès avec une interface ;
un moyen de transmission adapté pour transmettre le bloc de données codé et le résultat de la prédiction au dispositif central sans appliquer le décodage prédéterminé au bloc de données codé ;
un moyen de demande adapté pour demander une retransmission du bloc de données codé à l'appareil si le moyen de prédiction prédit que le bloc de données codé ne peut pas être décodé par le décodeur, et
un moyen de modification adapté pour modifier un algorithme utilisé par le moyen de prédiction pour prédire si le bloc de données codé reçu peut être décodé ou non avec succès, la modification étant basée au moins sur des informations relatives à un taux de fausses prédictions reçues en provenance du dispositif central.

2. Appareil selon la revendication 1, le moyen de transmission étant adapté pour transmettre le bloc de données codé indépendamment du fait que le moyen de prédiction prédit ou non que le décodeur peut décoder le bloc de données codé.

3. Appareil selon l'une quelconque des revendications précédentes, comprenant en outre :
un moyen de réception adapté pour recevoir une indication en provenance du dispositif central selon laquelle le dispositif central détermine que le résultat de la prédiction est différent d'un résultat de décodage du bloc de données au niveau du dispositif central,
le moyen de demande étant adapté pour demander la retransmission indépendamment du fait que l'indication soit reçue ou non en provenance du dispositif central.

4. Appareil selon la revendication 3, comprenant en outre :
un moyen de surveillance adapté pour surveiller si l'indication reçue indique une prédiction de faux négatif ;
un moyen de mise en application adapté pour mettre en application, si l'indication de prédiction de faux négatif est reçue, le moyen de prédiction pour prédire qu'un bloc de données codé retransmis reçu peut être décodé avec succès par le décodeur prédéterminé, le bloc de données codé retransmis étant reçu en raison d'une demande de retransmission du bloc de données codé.

5. Appareil selon l'une quelconque des revendications 1 à 4, comprenant en outre :
un moyen de codage adapté pour coder un bloc de données en liaison descendante reçu en provenance du dispositif central.

6. Appareil selon l'une quelconque des revendications 1 à 5, comprenant en outre :
un moyen de programmation adapté pour programmer une ressource de liaison descendante pour la demande de retransmission.

7. Appareil selon l'une quelconque des revendications 1 à 6, comprenant en outre :
un moyen de réservation adapté pour réserver une partie d'une ressource de liaison montante pour des retransmissions comprenant la retransmission du bloc de données codé sur la base d'une instruction provenant du dispositif central, l'instruction étant reçue avant le bloc de données codé ;
un moyen d'attribution adapté pour attribuer la partie réservée de la ressource de liaison montante pour les retransmissions ;
un moyen d'inhibition adapté pour inhiber l'attribution de la partie réservée de la ressource de liaison montante pour une autre transmission différente des retransmissions.

8. Appareil selon l'une quelconque des revendications 1 à 7, le moyen de prédiction étant adapté pour prédire si le bloc de données codé reçu peut être décodé avec succès sur la base d'au moins un élément parmi une qualité de rapport signal sur interférence et bruit d'au moins un bloc du bloc de données codé reçu et d'un autre bloc de données codé reçu différent du bloc de données codé, un schéma de modulation d'au moins un du bloc de données codé reçu et de l'autre bloc de données codé, un schéma de codage d'au moins un du bloc de données codé reçu et de l'autre bloc de données codé, une probabilité d'erreur cible, des informations d'interférence d'une cellule environnante reçue en provenance du dispositif central, et une prédiction de canal reçue en provenance du dispositif central.

9. Appareil selon l'une quelconque des revendications 1 à 8, comprenant en outre :
un moyen de fourniture de bits souple adapté pour fournir un ou plusieurs bits souples avec le bloc de données codé et le résultat de prédiction, le ou les bits souples indiquant une fiabilité du résultat de prédiction.

10. Appareil, comprenant :
un moyen de réception pour recevoir un bloc de données codé et un résultat de prédiction à partir d'un nœud d'accès connecté à une interface avec l'appareil, le résultat de prédiction indiquant si le bloc de données codé peut être décodé ou non avec succès par l'appareil, l'appareil étant ou étant compris dans un dispositif central gérant une pluralité de nœuds d'accès ;
un moyen de décodage pour décoder le bloc de données codé reçu ;
un moyen d'obtention de résultat de décodage adapté pour obtenir un résultat de décodage à partir du moyen de décodage, le résultat de décodage indiquant si le décodage du bloc de données codé reçu a été réussi ou non ; et
au moins une combinaison d'un moyen de détection d'une prédiction de faux négatif et d'un moyen d'indication de faux négatif et une combinaison d'un moyen de détection de prédiction de faux positif et d'un moyen de correction de faux positif,
le moyen de détection de prédiction de faux négatif étant adapté pour détecter une prédiction de faux négatif si le résultat de prédiction est négatif et si le résultat de décodage est positif ;
le moyen d'indication de faux négatif étant adapté pour indiquer au nœud d'accès que la prédiction était un faux négatif si la prédiction de faux négatif est détectée ;
le moyen de détection de prédiction de faux positif étant adapté pour détecter une prédiction de faux positif si le résultat de prédiction est positif et si le résultat de décodage est négatif ; et
le moyen de correction de faux positif étant adapté pour déclencher un moyen de demande de répétition automatique pour demander une retransmission du bloc de données codé si la prédiction de faux positif est détectée ; et
le moyen de modification adapté pour modifier un algorithme basé sur au moins un taux parmi un taux des prédictions de faux positif et un taux des prédictions de faux négatif, l'algorithme étant utilisé par un moyen de prédiction dans le nœud d'accès pour obtenir le résultat de prédiction.

11. Appareil selon la revendication 10,
le moyen de décodage utilisant la correction d'erreur directe dans le décodage du bloc de données codé reçu.

12. Appareil selon l'une quelconque des revendications 10 à 11, comprenant en outre :
un moyen de réservation adapté pour réserver une partie d'une ressource de liaison montante pour une retransmission initiée par le nœud d'accès ;
un moyen d'indication adapté pour indiquer la partie réservée au nœud d'accès ; et
un moyen d'inhibition adapté pour inhiber l'attribution de la partie réservée de la ressource de liaison montante à une transmission de liaison montante non initiée par le nœud d'accès.

13. Procédé, comprenant :
la prédiction du fait qu'un bloc de données codé reçu par un appareil sur une liaison montante peut être décodé ou non avec succès par un décodeur prédéterminé adapté pour appliquer un décodage prédéterminé sur le bloc de données codé, l'appareil étant ou étant compris dans un nœud d'accès d'un réseau d'accès radio et le décodeur prédéterminé étant compris dans un dispositif central gérant une pluralité de nœuds d'accès et connecté au nœud d'accès avec une interface ;
la transmission du bloc de données codé et d'un résultat de la prédiction au dispositif central sans appliquer le décodage prédéterminé au bloc de données codé ;
la demande d'une retransmission du bloc de données codé à un appareil réalisant le procédé s'il est prédit que le bloc de données codé ne peut pas être décodé par le décodeur ; et
la modification de ladite prédiction pour savoir si le bloc de données codé reçu peut être décodé ou non avec succès, la modification étant basée au moins sur des informations relatives à un taux de fausses prédictions reçues en provenance du dispositif central.
